# EUROPEAN PATENT SPECIFICATION

(11) **EP 1 026 820 B1**
(45) Date of publication and mention of the grant of the patent: **28.04.2004**
(21) Application number: 99830062.8
(22) Date of filing: 04.02.1999
(51) Int. Cl.: H02P 6/22

(54) **Start-up procedure for brushless DC motors having position sensors with angular resolution lower than the resolution of the driving system**
Startverfahren für bürstenlose Gleichstrommotoren mit Positionssensoren, die eine niedrigere Winkelgeschwindigkeit haben als das Antriebssystem
Procédé de démarrage pour moteurs à courant continu sans balai avec capteurs de position, ayant une vitesse plus faible que la vitesse de la système d'entraînement

(43) Date of publication of application: 09.08.2000
(73) Proprietor: STMicroelectronics S.r.l., 20041 Agrate Brianza (Milano) (IT)
(72) Inventor: Viti, Marco, 20099 Sesto San Giovanni (IT); Boscolo, Michele, 30019 Sottomarina (IT)
(74) Representative: Pellegri, Alberto

(56) References cited:
- EP-A- 0 189 675
- EP-A- 0 741 449
- PATENT ABSTRACTS OF JAPAN vol. 098, no. 005, 30 April 1998 & JP 10 028395 A (SANYO ELECTRIC CO LTD), 27 January 1998

## Description

### FIELD OF THE INVENTION

The present invention relates to multiphase brushless DC motors (typically triphase) that utilize position sensors, for instance Hall effect sensors or special circuits for detecting electromagnetic parameters of the phase windings providing for a certain angular resolution. More precisely, the invention relates to a start-up procedure for motors having one or more position sensors having an angular resolution lower than the angular resolution of the driving system that assumes control and drive the motor once the start-up procedure has terminated.

### BACKGROUND OF THE INVENTION

A brushless motor consists of a permanent magnet rotor and'a stator made up of a certain number of windings (typically three) usually connected in a star configuration.

However, the number of windings may also be connected independently from each other, and both terminals of each phase winding may be available for external connection in order to permit the driving of each winding in a completely independent manner from the other windings.

Another common configuration that may be used is the so-called or delta or polygonal configuration.

Referring by way of example to a classical triphase brushless motor connected in a star or delta configuration, the driving generally occurs by way of integrated circuits whose output power stages that drive the phase windings may be implemented in the form of full-wave triphase bridge stage composed of six bipolar or MOS power transistors.

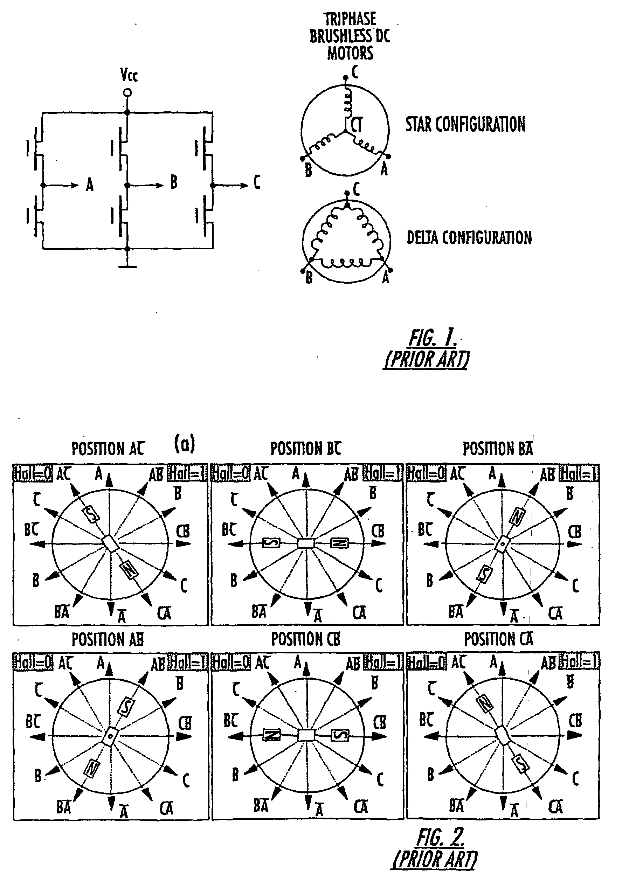

Fig. 1 represents a typical driving stage and the scheme of a triphase DC brushless motor, for the two most common configurations.

The prevalent driving method for this type of motor is the so-called "bipolar" method, that is, whereby at any instant, two of the windings are fed, whereas the third winding is unpowered (for example by placing the respective output node of the full-bridge or half-bridge in a state of high impedance, HiZ).

The windings are switchingly driven according to a cyclic sequence which must be synchronized with the instantaneous position of the rotor (that is, the position of its magnetic axis) which, during a bipolar driving mode, may be easily monitored by monitoring the back electromotive force (BEMF) of the winding that is momentarily unpowered (during a certain switching phase) or the rotor position may be more conventionally sensed through physical position sensors, like Hall-effect sensors.

Patent Abstracts of Japan, vol. 098, No. 005, 30 April 1998 & JP 10028395 A, 27 January 1998, disclose a position detector for a brushless DC motor monitoring the back electromotive force (BEMF) on the winding that is momentarily not powered, while masking detection for a certain time after each phase switching to allow for the decay of disturbances caused by the phase switching.

An alternative and advantageous driving method, described in the prior European patent application EP 809349, in the name of the same applicant, is based on applying a driving signal to all the windings in a continuous mode and with a waveform profile that optimizes motor performances (for instance with sinusoidal drive signals).

Especially with this driving method, it is advantageous to use position sensors, without the need to purposely interrupt the driving in order to monitor the BEMF.

At present, there exist on the market motors with a number of position sensors equal to the number of phases of the motor itself. However, polyphase DC brushless motors with only one sensor to reduce costs should be available in the future. This will reduce costs but provide for an angular resolution of the positions of the rotor with a much lower than the angular resolution compatibilities of the driving systems that are commonly used nowadays.

In fact, a single Hall effect sensor may discriminate positions with an angular resolution of 180 electrical degrees, whereas a common driving system for polyphase motors is far more precise, that is, has an angular resolution much higher than 180 electric degrees.

A specific start-up procedure is required for a Brushless DC motor only for sensorless motors or in those cases where the information obtained from the sensors is insufficient due to an insufficient angular resolution to identify the right phase to be commanded and such to yield the maximum torque.

In these cases, a start-up routine must be performed in order to generate the torque necessary to overcome static friction and to bring the motor to rotate at a speed sufficient to permit the exploitation of the method of monitoring the voltage induced on the windings through which momentarily is not forced any driving current, by the rotor (BEMF voltage) or the signal or signals originating from the position sensors to synchronize the phase switchings.

### OBJECT AND SUMMARY OF THE INVENTION

The aim of the present invention is to provide a start-up procedure for polyphase motors having position sensors, for example Hall effect sensors, or exploiting special circuits for assessing electromagnetic parameters of the phase windings, of angular resolution lower than the resolution of the driving system.

According to the present invention, by knowing or assuming an initial rotor's position with the motor on a stand still, a sequence of excitation of the phase windings is generated such to rotate the rotor in the desired direction.

The starting phase of the excitation sequence is chosen in consideration of a known or assumed initial rotor's position and the sequence of the phase switchings advances until reaching the a predefined position of the electric revolution, which may be chosen in function of the position or positions of the sensor or sensors.

Once the switching sequence has reached the point of exciting the phase corresponding to such a preselected position, the routine may proceed in two alternative ways:
1) The switching sequence is halted and a change of state of the digital signal output by position sensor/sensors is waited for. When this occurs, the phase switchings resume and let to progress to a new preselected position when they are interrupted again, waiting for the occurrence of a change of state of the position sensor(s) signal(s). These steps are repeated until the start-up is considered complete, for example, when the motor exceeds a certain minimum speed.
2) The digital codes originating from the position sensor(s) is used to establish the phases to be excited successively.

The invention is defined in the annexed claims.

The present invention applies to any type of multiphase brushless motor.

### BRIEF DESCRIPTION OF THE DRAWINGS

**Figure 1** shows the schemes of an output triphase bridge stage and of a triphase DC brushless motor, in a star or triangle configuration, connectable to it.
**Figure 2** shows the six different electric positions in which a triphase brushless DC motor in a stand-still condition may be for a resolution of 60 electrical degrees.
**Figure 3** shows a possible excitation sequences of the motor's phases during a first acceleration period for a clockwise rotating direction. In the example, "check zones" have been chosen such to coincide with the zones where the only Hall effect sensor installed changes state.

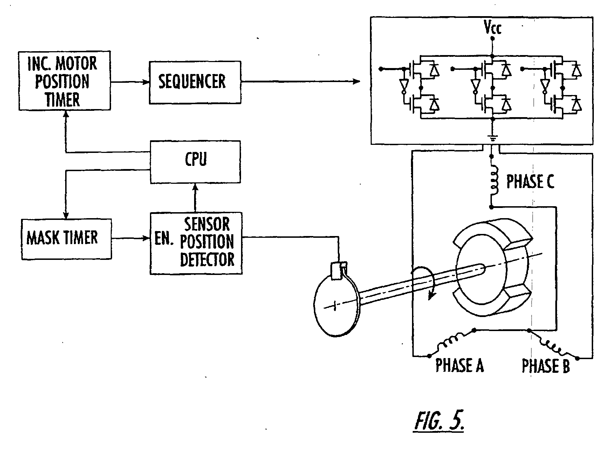

**Figure 4** shows a possible excitation sequence of the motor phases during a first acceleration period for a counter-clockwise rotation. The "check zones" are chosen to coincide with the zones where the only Hall effect sensor installed changes state.
**Figure 5** shows a block diagram of a system implementing the start-up routine of the invention for the case of a triphase brushless motor in a star configuration.
**Figures 6** and **7** are flow sheets of alternative embodiments of the start-up routine of the invention.

### DESCRIPTION OF THE START-UP ROUTINE

The following expressions and definitions are adopted to simplify the ensuing description:
***"Excite the position"*** stands for *"exciting the motor's phases in order to produce a torque which tends to rotate the rotor (i.e. its magnetic axis) to a certain angular position of the electric revolution of the motor".*
***"Excite the successive position"*** stands for *"exciting the motor's phases such to produce a torque that tends to rotate the rotor (that is its magnetic axis) to an angular position immediately successive to its present position, (in a clockwise or in a counter-clockwise direction as desired)".* The successive angular position will differ from the previous one by α electric degrees where α is the angular resolution of the driving system being used.

For example, in a triphase brushless DC motor driven in a traditional "bipolar" mode (2 phase windings ON, and 1 phase winding OFF), α is equal to 60 electric degrees. **"AC"**, **"BC"**, **"BA"**, **"CA"**, **"CB"**, **"AB"** are the six angular rotor's positions which may be commanded in a triphase brushless DC motor, by exiting two windings while leaving the third winding in a high impedance.

For example: "AC" is the rotor angular position that is commanded by applying a voltage on the A terminal higher than the voltage applied on the C terminal. "CA" is the rotor angular position of the rotor that is commanded by applying a voltage on the C terminal higher than the voltage applied on the A terminal, and so forth.

These positions may be observed in Fig. 2.

**"*x* zone relative to phase *x*":** (where *x* may be AC, BC, BA, CA, CB, AB) is the angular zone which, centered in x, covers an arc of α electric degrees.
**"check zone":** is an arc of α electric degrees which may be chosen in consideration of the location of the position sensor or sensors.

The method of the invention may be illustrated by starting from the hypothesis (easily realizable in practice) that the rotor position be known at the beginning of a start-up routine.

With the motor at a stand still, it is possible to detect the rotor's position by any one of several different known techniques, generally based on measuring the time constant of the R-L circuit of each motor winding. In fact, this parameter is a function of the rotor's position.

By assuming to be able to detect the rotor's position while the motor is still at stand still, with a 60 electric degrees resolution, the six detectable electrical positions, in case of a triphase brushless DC motor with a single Hall effect position sensor, driven in a traditional "bipolar" mode, that is with two phases ON and a phase OFF, are illustrated in Fig. 2. Of course, they also represent the six angular positions toward which the rotor may be commanded to move, for the case of a triphase brushless DC motor, by exiting two phases while leaving the third at a high impedance (2 phases ON and 1 phase OFF).

The start-up routine involves to start rotor movement by exciting, for pre-established intervals of time (to be defined in function of the motor's characteristics), the motor's positions that follow the position at which the rotor was found to be at rest. In this first step of the routine the rotor is accelerated in the desired direction of rotation.

When the period of time during which the signals originating from the position sensor/sensors are discarded elapses (e.g. a masking time ≥0), it is assessed which position is being excited, while continuing the excitation of the successive positions until a pre-established position, that is to say, the position centered with a certain "check zone" that may be chosen to correspond to the location of the sensor/sensors or until the occurrence (outside the masked zone) of a change of state of the position sensor/sensors. When one or the other of the above noted two conditions is verified, the code provided by the position sensor/sensors is used to establish a "check zone" to be reached by further exciting in sequence the next positions.

### EXAMPLE

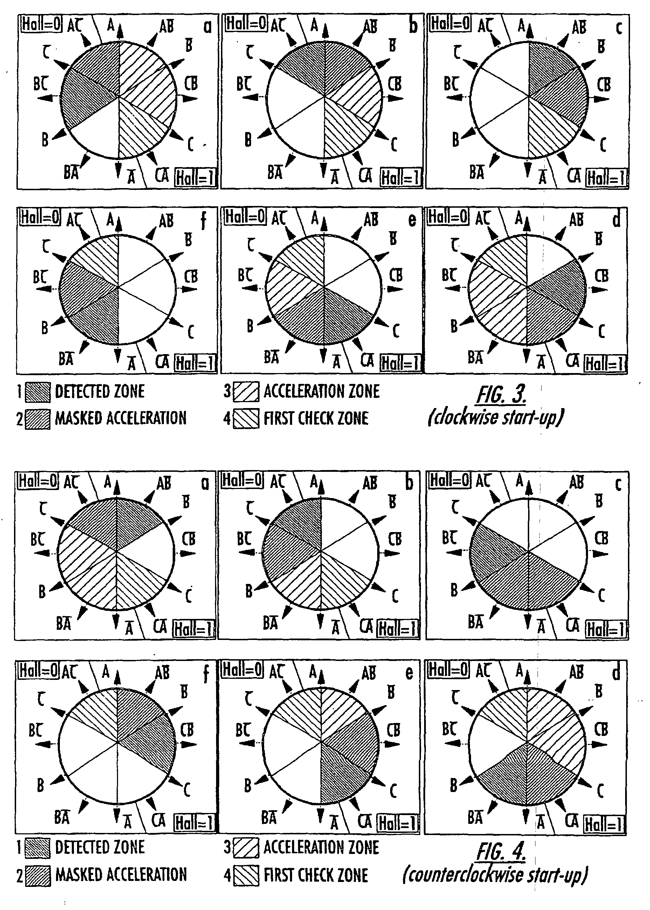

Fig. 3 shows the case of a triphase brushless DC motor with one Hall-effect position sensor, placed to switch when a magnetic axis of the rotor crosses; the CA and AC "check zones" (arcs of a circumference).

In addition, it has been assumed that the driving system allows for an angular resolution (α) of 60 electric degrees and a clock-wise rotation.

The six possible excitation positions are AC, AB, CB, CA, BA, BC.

Referring to Fig. 3a the rotor is initially positioned'in BC and the masked interval of acceleration corresponds to an excitation period of the AC position (position that follows the initially known or assumed position with the motor at rest), the first "check zone" corresponds to the CA position zone whereas another "check zone" corresponds to the AC position zone (not shown in the figure).

Indeed, this example considers as "check zones" those which when traversed by the magnetic axis cause the signal originating from the sensor to change its value.

In the example considered, the start-up routine beings with the excitation of the AC for a certain time (for a time ≥0 during which the signal originating from the position sensor is not read) to continue thereon by exciting (for a time ≥ 0) the AB, CB and CA positions.

If during the excitation of the positions AB or CB, the signal originating from the position sensor changes and the sensor's coding is then immediately used to establish the new "check zone" to be reached by exciting the successive positions for intervals of time greater than 0.

In the described example, if a variation of the signal coming from the position sensor is detected during the excitation of the positions AB and CB and its new state is "1", then as the new "check zone" is taken the one relative to the CA position; viceversa if the signal variation of the position sensor detected during the excitation of the positions AB or CB is to "0", then as the new "check zone" is taken the zone relative to the AC position.

If at the end of the excitation time of the AB and CB positions the signal originating from the position sensor does not vary, sensor code is notwithstandingly used to establish the new "check zone" to be reached by exciting successive positions for time intervals ≥0.

In this case, if at the end of the excitation period of the CB position, the position sensor switches to "0", the new "check zone" will be the AC position, if it switches to "1" the new "check zone" will be the CA position.

Therefore, in the latter case, the "check zone" to be reached by way of successively exciting the relative positions to be crossed is determined by the digital code of the position sensor.

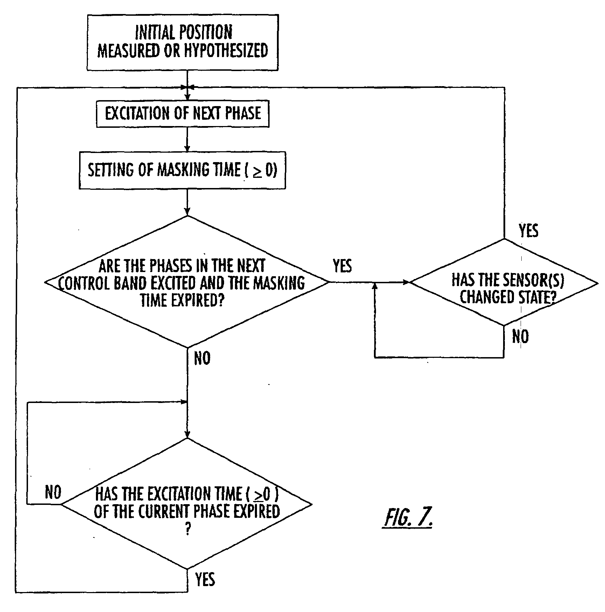

A flowsheet of the embodiment of the invention described above is depicted in Fig. 6.

An alternative embodiment of the invention is depicted by the flowsheet of Fig. 7. According to this alternative embodiment, once the set "check zone" is reached, a change of state of the position sensor is waited for continuing with the excitations of the next positions in sequence.

### END OF THE START-UP PROCEDURE

The above described algorithms may be interrupted at any movement the start-up of the motor is considered concluded, in practice this is done upon reaching a certain speed.

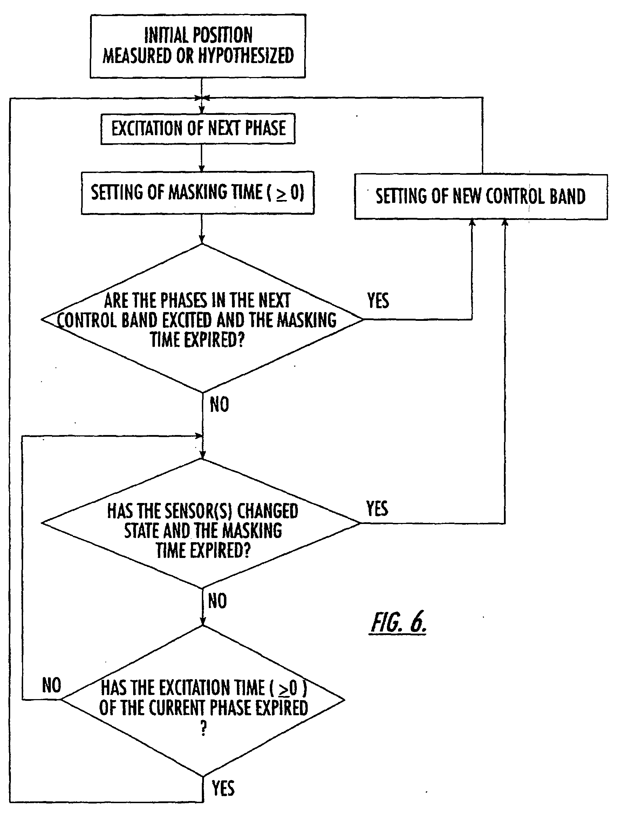

Fig. 5 shows a scheme of a start-up system implementing the routine of the invention, for a triphase brushless DC motor equipped with only one position sensor.

The system employs a CPU which sets the masked acceleration time and the excitation time of the different positions following in sequence the position read or at rest.

The position sensor is enabled after a preestablished time (masked acceleration) that is set by the mask timer; the block sequencer increments the motor positions at intervals determined by the value set through the block inc motor position time.

## Claims

1. Start-up method for a multiphase brushless DC motor having one or more rotor position sensors for providing for an angular resolution less than the angular resolution of the synchronized driving system of the motor, **characterized by** the following steps:
a) setting at least an angular check zone having an arc length angularly correlated to the position of said sensor or sensors;
b) assessing or presuming a certain initial rest position of the rotor;
c) exciting for fixed time intervals the phase windings in a sequence for rotating the rotor in a desired direction toward an angular position next to the initial rest position while masking the signals or digital codes of the position sensor or sensors for a predefined masking time;
d) repeating step c) until verifying that the excited phases are those commanding advancement of the rotor toward said angular check zone, or verifying a change of state of the signals of said position sensor or sensors, if the predefined masking time has elapsed;
e) associating to each signal of said position sensor or sensors a new angular check zone to be reached by repeating the sequence of operations starting from step c).

2. Start-up method for a multiphase brushless DC motor having one or more rotor position sensors for providing an angular resolution less than the angular resolution of the synchronized driving system of the motor, **characterized by** the following steps:
a) setting at least an angular check zone having an arc length angularly correlated to the position of said sensor or sensors;
b) assessing or presuming a certain initial rest position of the rotor;
c) exciting for fixed time intervals the phase windings in a sequence such for rotating the rotor in a desired direction toward an angular position next to the initial rest position, in the desired direction, while masking the signals or digital codes of the position sensor or sensors for a predefined masking time;
d) repeating step c) until verifying that the excited phases are those commanding advancement of the rotor toward said angular check zone, or verifying a change of state of the signals of said position sensor or sensors, if the predefined masking time has elapsed;
e) stopping the sequence of exciting the phase switchings until the signals of said position sensor or sensors change state, and repeating the sequence of operations starting from step c).

## Patentansprüche

1. Verfahren zum Anfahren eines bürstenlosen Mehrphasen-Gleichstrommotors, der einen oder mehrere Rotorpositionssensoren besitzt, die eine Winkelauflösung schaffen, die niedriger als die Winkelauflösung des synchronisierten Antriebssystems des Motors ist, **gekennzeichnet durch** die folgenden Schritte:
a) Festlegen wenigstens einer Winkelprüfzone, die eine Bogenlänge besitzt, die in Winkelrichtung mit der Position des oder der Sensoren korreliert ist;
b) Zuweisen oder im Voraus Annehmen einer bestimmten Anfangsruheposition des Rotors;
c) Erregen der Phasenwicklungen in festen Zeitintervallen in einer Folge zum Drehen des Rotors in einer gewünschten Richtung in eine Winkelposition, die sich in der Nähe der Anfangsruheposition befindet, während die Signale oder digitalen Codes des Positionssensors oder der Positionssensoren für eine im Voraus definierte Maskierungszeit maskiert werden;
d) Wiederholen des Schrittes c), bis verifiziert wird, dass die erregten Phasen jene sind, die den Vorschub des Rotors zu der Winkelprüfzone befehlen, oder bis eine Zustandsänderung der Signale des Positionssensors oder der Positionssensoren verifiziert wird, falls die im Voraus definierte Maskierungszeit verstrichen ist;
e) Zuordnen einer neuen Winkelprüfzone zu jedem Signal des Positionssensors oder der Positionssensoren, die **durch** Wiederholen der Folge von Operationen beginnend beim Schritt c) erreicht werden soll.

2. Verfahren zum Anfahren eines bürstenlosen Mehrphasen-Gleichstrommotors, der einen oder mehrere Rotorpositionssensoren besitzt, die eine Winkelauflösung schaffen, die niedriger als die Winkelauflösung des synchronisierten Antriebssystems des Motors ist, **gekennzeichnet durch** die folgenden Schritte:
a) Festlegen wenigstens einer Winkelprüfzone, die eine Bogenlänge besitzt, die in Winkelrichtung mit der Position des Sensors oder der Sensoren korreliert ist;
b) Zuweisen oder im Voraus Annehmen einer bestimmten Anfangsruheposition des Rotors;
c) Erregen der Phasenwicklungen in festen Zeitintervallen in einer Folge zum Drehen des Rotors in einer gewünschten Richtung in eine Winkelposition, die sich in der gewünschten Richtung in der Nähe der Anfangsruheposition befindet, während die Signale oder digitalen Codes des Positionssensors oder der Positionssensoren für eine im Voraus definierte Maskierungszeit maskiert werden;
d) Wiederholen des Schrittes c), bis verifiziert wird, dass die erregten Phasen jene sind, die den Vorschub des Rotors in die Winkelprüfzone befehlen, oder bis eine Zustandsänderung der Signale des Positionssensors oder der Positionssensoren verifiziert wird, falls die im Voraus definierte Maskierungszeit verstrichen ist;
e) Anhalten der Folge von Erregungen der Phasenwicklungen, bis die Signale des Positionssensors oder der Positionssensoren ihren Zustand ändern, und Wiederholen der Folge von Operationen beginnend beim Schritt c).

## Revendications

1. Procédé de démarrage d'un moteur à courant continu polyphasé sans collecteur comprenant un ou plusieurs détecteurs de position de rotor pour fournir une résolution angulaire inférieure à la résolution angulaire du système d'entraînement synchronisé du moteur, **caractérisé par** les étapes suivantes :
a) établir au moins une zone de vérification angulaire ayant une longueur d'arc corrélée angulairement à la position du ou des capteurs ;
b) déterminer ou supposer une certaine position de repos initiale du rotor ;
c) exciter pendant des intervalles de temps fixes les enroulements de phase selon une séquence pour faire tourner le rotor dans une direction désirée vers une position angulaire suivante par rapport à la position de repos initiale tout en masquant les signaux ou les codes numériques du ou dés capteurs de position pendant une durée de masquage ;
d) répéter l'étape c) jusqu'à ce que l'on vérifie que les phases excitées sont celles qui commandent l'avancement du rotor vers la zone de vérification angulaire, ou que l'on vérifie un changement d'état des signaux du ou des capteurs de position si la durée de masquage prédéterminée s'est écoulée ;
e) associer à chaque signal du ou des capteurs de position une nouvelle zone de vérification angulaire à atteindre en répétant la séquence d'opérations en partant de l'étape c).

2. Procédé de démarrage d'un moteur à courant continu polyphasé sans collecteur comprenant un ou plusieurs détecteurs de position de rotor pour fournir une résolution angulaire inférieure à la résolution angulaire du système d'entraînement synchronisé du moteur, **caractérisé par** les étapes suivantes :
a) établir au moins une zone de vérification angulaire ayant une longueur d'arc corrélée angulairement à la position du ou des capteurs ;
b) déterminer ou supposer une certaine position de repos initiale du rotor ;
c) exciter pendant des intervalles de temps fixes les enroulements de phase selon une séquence pour faire tourner le rotor dans une direction désirée vers une position angulaire suivante par rapport à la position de repos initiale, dans la direction désirée, tout en masquant les signaux ou les codes numériques du ou des capteurs de position pendant une durée de masquage ;
d) répéter l'étape c) jusqu'à ce que l'on vérifie que les phases excitées sont celles qui commandent l'avancement du rotor vers la zone de vérification angulaire, ou que l'on vérifie un changement d'état des signaux du ou des capteurs de position si la durée de masquage prédéterminée s'est écoulée ;
e) arrêter la séquence d'excitation de commutation de phase jusqu'à ce que les signaux du ou des capteurs de position changent d'état, et répéter la séquence d'opérations en partant de l'étape c).
